# EUROPEAN PATENT SPECIFICATION

(11) **EP 2 018 095 B1**
(45) Date of publication and mention of the grant of the patent: **20.09.2017**
(21) Application number: 07748026.7
(22) Date of filing: 18.04.2007
(51) Int. Cl.: A01B 59/00, A01D 34/00, A01D 34/64, F16H 7/00, A01D 34/66, A01B 59/06, A01D 67/00

(54) **IMPLEMENT CARRIER**
GERÄTETRÄGER
SUPPORT D'INSTRUMENT

(30) Priority: 18.05.2006 SE 0601103
(43) Date of publication of application: 28.01.2009
(73) Proprietor: GGP Sweden AB, 573 28 Tranås (SE)
(72) Inventor: KLASSON, Jan, 573 40 Tranås (SE); OLSSON, Patrik, 573 61 Sommen (SE)
(74) Representative: Mittler, Andrea
(86) International application number: PCT/SE2007/000361
(87) International publication number: WO 2007/136313

(56) References cited:
- DE-A1- 4 323 484
- US-A- 4 102 114
- US-A- 4 914 898
- US-A- 4 914 898
- US-A- 4 969 319
- US-A- 5 338 148
- US-A- 6 131 380
- US-A1- 2003 221 399
- US-A1- 2004 093 840

## Description

### Field of the Invention

The present invention relates to an implement carrier according to the preamble to claims 1 and 9.

### Background Art

An generic implement carrier is known from document US-A-2003/0221399.

Such an implement carrier can be used as a garden machine and has the form of a vehicle, in front of which an implement is mounted. The implement is attached at different points on the front portion of the implement carrier, for instance to the front wheel axle of the implement carrier in the hubs of the front wheels.

The implement may consist of a lawn mower, a grass chopper, a sweeper, a plough blade, a snow blower etc, according to the current use of the garden machine/implement carrier.

If the implement is of a type comprising movable driven parts, such as one of the above mentioned examples, except for the plough blade, a power transmission is arranged between the implement carrier and the implement so that the engine of the implement carrier can also be used to drive the movable parts of the implement. This is usually done with a driving belt which is driven by a pulley in the implement carrier and drives a pulley in the implement. For efficient power transmission, the driving belt is to be firmly tensioned, and to prevent the driving belt from sliding off the pulleys, the pulleys are formed with deep grooves. This causes difficulties as an implement is to be disconnected, for instance in order to replace one implement with another.

It is often possible to reduce the tension in the driving belt to some extent by slightly raising the implement. However, it is also necessary, due to the deep grooves of the pulleys, to manually slip the driving belt off the pulley of the implement while at the same time the pulley is turned. This is heavy and difficult work and may also result in a certain risk of the user being pinched.

According to prior art technique, this problem can be solved by means of a belt idler which is placed in the implement and which in operation keeps the driving belt tensioned. When the implement is to be disconnected, the belt idler is first moved so as to provide a slack of the driving belt which can then be removed. An inconvenience when using belt idlers is that additional movable parts are necessary on each implement and that the loss of performance increases since also the belt idler must be driven.

### Summary of the Invention

An object of the present invention is to provide an implement carrier in which a driving belt can more easily be removed in order to disconnect an implement.

This object is achieved with an implement carrier according to claim 1. More specifically, the implement carrier has fastening means for mounting an implement in front of the implement carrier in the driving direction thereof, the implement being fastened to the front part of the implement carrier. At least one of said fastening means comprises a sleeve part, which is attached at a first point of attachment on the implement carrier and is pivotable about a first horizontal pivot extending substantially perpendicular to the driving direction of the implement carrier, and an implement fastener, to which an implement can be fastened, said implement fastener being attached at a second point of attachment on the sleeve part and there is pivotable about a second horizontal pivot extending substantially perpendicular to the driving direction of the implement carrier. Moreover the fastening means has an actuator part by means of which the sleeve part is pivotable about said first horizontal pivot from a first position, where the first point of attachment is positioned behind the second point of attachment, to a second position, where the first point of attachment is positioned in front of the second point of attachment.

With such a fastening means, the implement can, during disconnection, first be moved a few centimetres closer to the implement carrier. The driving belt thus slackens and can be removed more easily.

The implement carrier may have such fastening means on both sides of the centre line extending in the driving direction of the implement carrier, and the fastening means can be positioned in the hubs of the front wheels of the implement carrier. It is thus possible to fasten the implement to the implement carrier front axle which is dimensioned to take up high loads.

The actuator part may extend in two directions from said second horizontal pivot and will thus be easy for the user to operate with his foot.

The actuator part can in the first position be prevented from rotating forwards and the second horizontal pivot can be placed under the first horizontal pivot. The fastening means can then take up high rearward forces, without the fastening means leaving the first position.

The actuator part can in the first position also be locked to the implement fastener, for example by means of a cotter pin.

The actuator part can be attached to the sleeve part, so that it cannot be lost.

The implement carrier can be attached to the second point of attachment by a recess in the implement carrier, so that the implement fastener in the first position is locked to the second point of attachment and in the second position is detachable from the second point of attachment.

Moreover claim 9 defines an implement carrier, which comprises fastening means for mounting an implement in front of the implement carrier in the driving direction thereof, the implement being fastened to the front part of the implement carrier, in which at least one of said fastening means comprises a sleeve part, which is attached at a first point of attachment on the implement carrier, is pivotable about a first horizontal pivot extending substantially perpendicular to the driving direction of the implement carrier, and has a second point of attachment to which an implement fastener can be attached so that the implement fastener is pivotable about a second horizontal pivot extending substantially perpendicular to the driving direction of the implement carrier, and an actuator part, by means of which the sleeve part is pivotable about said first horizontal pivot from a first position, where the first point of attachment is positioned behind the second point of attachment, to a second position, where the first point of attachment is positioned in front of the second point of attachment.

The actuator part can be formed integrally with the sleeve part and the actuator part can have an opening, in which a pin positioned on the implement fastener is insertable for locking. Herein is further disclosed an implement fastener, for fastening an implement to an implement carrier, in which the implement fastener comprises a flat bar with a recess which is oriented downwards in use of the implement.

The implement fastener can have a pin which projects from the flat bar away from the mouth of the recess, and the pin can have a through hole extending perpendicular to the longitudinal direction of the pin.

### Brief Description of the Drawings

Fig. 1 is a schematic side view of an implement carrier with a connected implement.
Fig. 2 is an exploded view of a fastening means of an implement carrier.
Figs 3a - 3e are side views of the fastening means in Fig. 2 in five different positions.
Figs 4 and 5 illustrate an alternative embodiment of a fastening means.

### Description of an Embodiment

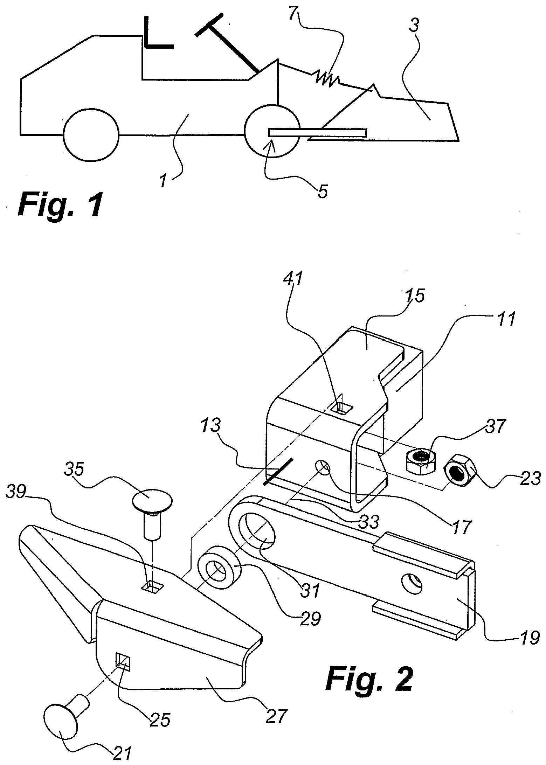

Fig. 1 illustrates, very schematically, a side view of an implement carrier 1 with a connected implement 3. The implement carrier has, as mentioned above, the form of a vehicle and is usually a ride-on lawn mower, in which the cutting assembly can be replaced by other implements, such as a snow blower in winter. The implement 3 is mounted at the front, which allows the driver of the vehicle to supervise the implement and prevents, for instance, the blades of grass from being pressed down by the wheels before cutting. The vehicle is suitably steered by the rear wheels or articulated in prior art manner. The implement 3 is fastened by a fastening means 5 to the front portion of the implement carrier 1, preferably so that it can be raised by being pivoted about a horizontal pivot which extends through the fastening means 5, perpendicular to the driving direction of the implement carrier. Resilient means 7 can be arranged between the implement 3 and the implement carrier 1, so as to facilitate upward pivoting. As already mentioned, a driving belt (not shown) can be arranged between the implement 3 and the implement carrier 1.

Fig. 2 is an exploded view of a fastening means of an implement carrier. The fastening means has a sleeve 11, which is attached to the implement carrier and pivotable about a horizontal pivot 13. The sleeve 11 can be arranged in such manner on the implement carrier that the horizontal pivot 13 extends substantially perpendicular to the driving direction of the implement carrier. This can suitably be done by the sleeve being attached to the front axle of the implement carrier, in the hub of a front wheel, in a per se known manner.

A yoke 15 of metal sheet is welded to the sleeve 11 so as to encompass the sleeve 11 on the upper side and underside. The yoke provides points of attachment for the other parts of the fastening means, as will be shown below. The sleeve 11 and the yoke 15 form a sleeve part. The yoke has a first hole 17, which is positioned about 20 mm in front of (with respect to the driving direction of the implement carrier) the pivot 13 of the sleeve 11 and is drilled parallel to the same.

The fastening means further has an implement fastener in the form of a fastening arm 19, to which an implement can in turn be attached in a per se known manner. The fastening arm is screwed into the first hole of the yoke 15 by means a first screw 21 and a first nut 23. The first screw is inserted into a first hole 25 in an actuator part 27, a hollow spacer 29, a hole 31 in the fastening arm 19 and said first hole 17 in the yoke 15. Subsequently the first nut 23 is tightened. The spacer 29 passes with a certain play into the hole 31 of the fastening arm 19 and has a thickness (for instance 7 mm) in the direction of extension of the first screw 21, which around the hole 31 exceeds the thickness (for instance 6 mm) of the fastening arm 19. As a result, the fastening arm 19 remains pivotable about a pivot 33 which extends through the first hole 17 of the yoke 15, even if the first nut 23 is firmly tightened.

Of course, other ways of arranging the fastening arm 19 to be pivotable relative to the sleeve part 11, 15 are conceivable.

The actuator part 27 is attached to the yoke 15 also by means of a second screw 35 and a second nut 37, this screw 35 being inserted through a second hole 39 in the actuator part 27 and a second hole 41 in the yoke 15. The yoke 15 can also have a third hole (not shown), which is positioned on the underside of the yoke in a position corresponding to the second hole 41. This makes it possible to use the sleeve part 11, 15 on both the right and the left side of the implement carrier.

The actuator part 27 can, as will be demonstrated below, be used to operate the sleeve part 11, 15 to a position where disconnection or connection of an assembly is facilitated. The actuator part consists of a bent metal sheet and extends forwards and backwards from the sleeve part in the position illustrated.

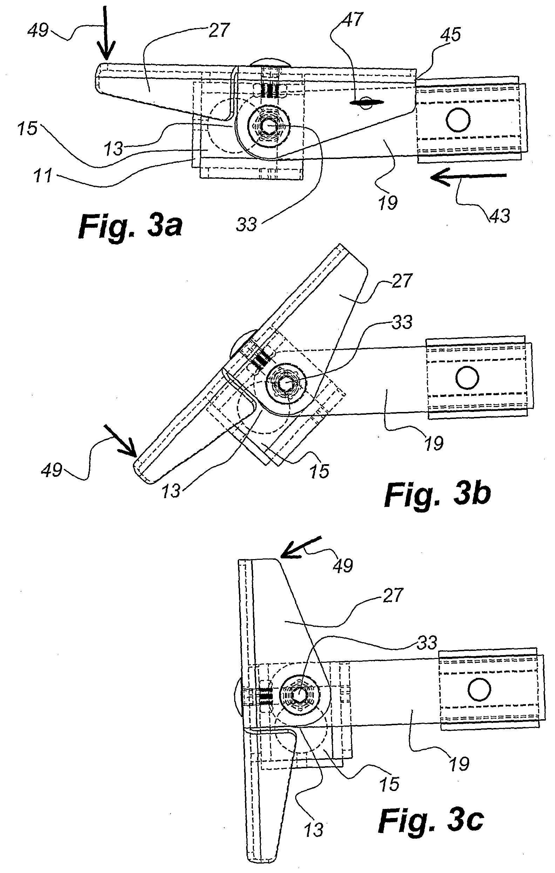

Figs 3a - 3e are side views of the fastening means in Fig. 2 in five different positions.

Fig. 3a illustrates the fastening means in a first position, the normal position, that is the position where the fastening means is located in operation of the implement. Suitably, the pivot 33 of the fastening arm 19 can in this position be located slightly under the pivot 13 of the sleeve part 11, 15. In this way, the fastening means can take up forces exerted on the fastening arm 19 in the direction of the arrow 43. Such forces strive to turn the actuator part 27 forwards (clockwise in the Figure), but since this abuts against the fastening arm 19 at a point 45, such turning is prevented. In certain applications, it may also be convenient to lock the actuator part 27, in operation, to the fastening arm 19 by means of a cotter pin 47 (only shown in Fig. 3a), which extends through holes in these parts. Other ways of fastening the actuator part to the fastening arm are, of course, conceivable.

As the implement is to be disconnected, the fastening means is actuated by applying a force 49 to the actuator part 27 in the direction of the shown arrow. A user can conveniently use his foot for this operation. A cotter pin 47, if any, must however first be removed.

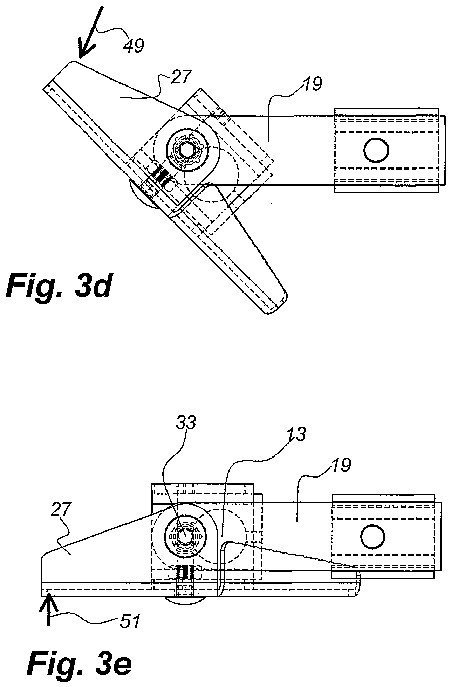

The applied force 49 makes the sleeve part 11, 15 and the associated actuator part 27 start rotating on the pivot 13, and the pivot 33 commences an orbit around the pivot 13, as shown in Figs 3b and 3c. In Fig. 3c, the sleeve part 11, 15 has been rotated through 90° and the force 49 is suitably applied to that part of the actuator which is in the uppermost position, as indicated by the arrow. Then the rotation continues as shown in Fig. 3d, and the fastening means finally arrives in the disconnection position shown in Fig. 3e. The total rotation is now 180°, and the point of attachment of the fastening arm on the sleeve part has now been moved from a position in front of the pivot of the sleeve part to a position behind the same, seen in the driving direction of the implement carrier. If the distance between the pivots 13 and 33 is 2 cm and the same operation is performed on both sides of the implement carrier, the implement has been moved 4 cm closer to the machine, thus allowing a driving belt to be easily disconnected.

The fastening means can be made to return to the starting position by turning back the sleeve part 11, 15, by applying a force 51 to the actuator part 27 in the direction of the arrow.

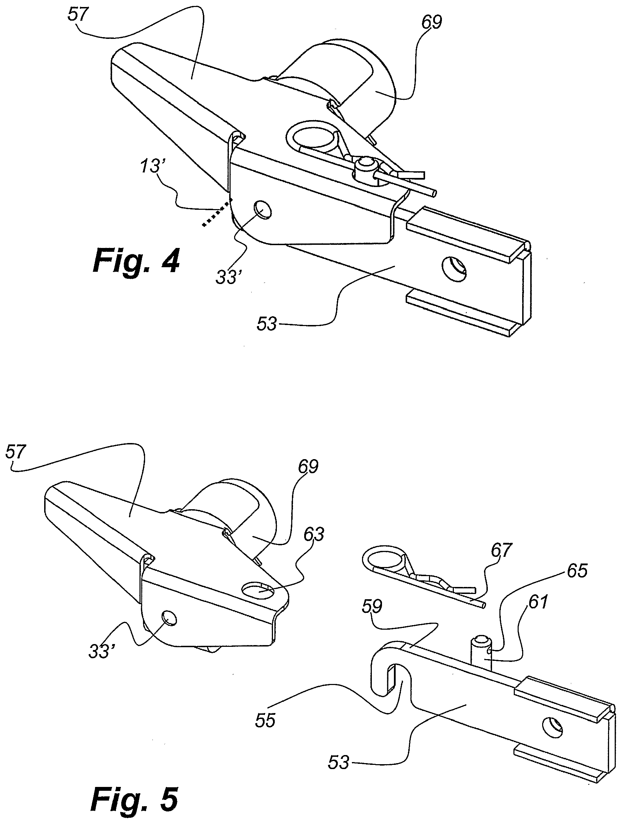

Figs 4 and 5 illustrate an alternative embodiment of a fastening means, which will be described with reference to these two figures. Fig. 4 illustrates the fastening means in the assembled state and Fig. 5 illustrates the fastening means with its parts disassembled.

This fastening means comprises, like the fastening means in Fig. 2, a sleeve part 69, which is attached at a first point of attachment on the implement carrier and is pivotable about a first horizontal pivot 13' extending substantially perpendicular to the driving direction of the implement carrier. Moreover, an implement fastener 53 is here also to be found, to which an implement can be fastened. The implement fastener can be attached at a second point of attachment on the sleeve part and is then pivotable about a second horizontal pivot 33', which is substantially parallel to the first horizontal pivot.

Also in this case, the sleeve part is pivotable about the first horizontal pivot 13', by means of an actuator part 57, from a first position (corresponding to Fig. 3a), where the first point of attachment is positioned behind the second point of attachment, to a second position (corresponding to Fig. 3e), where the first point of attachment is positioned in front of the second point of attachment.

In this embodiment, the fastening means comprises a fastening arm (implement fastener) 53 in the form of a flat bar, which is modified compared to the fastening arm 19 in Fig. 2. More specifically, the hole (31 in Fig. 2) of the fastening arm is replaced by a recess 55, which has its mouth oriented downwards in use of the implement. The recess allows the fastening arm to be hooked off from the second point of attachment of the sleeve part on the pivot 33', (corresponding to 33 in Fig. 2), in the position of disconnection (corresponding to Fig. 3e). In the normal position (in operation of the implement, corresponding to Fig. 3a), the actuator part 57 abuts, however, against the upper side 59 of the fastening arm 53, that is the side which is opposite the recess 55, so that the fastening arm cannot be hooked off. This enables integration of the fastening arm 53 with the implement so that the implement can be more easily connected to and disconnected from the implement carrier. In such an embodiment, each implement can have fixedly mounted or fully integrated fastening arms 53 of the type illustrated.

In the embodiment shown in Figs 4 and 5, the actuator part 57 and the sleeve part 69 are formed integrally with each other to form a unit. An actuator unit connected to the sleeve part by screw joints, as shown in Fig. 2, is, however, possible also in this case.

The fastening arm 53 is provided with a pin 61, which in the normal position is inserted into a hole 63 in the actuator part 57. In this position the pin 61 can be locked by a cotter pin 67 being inserted into a hole 65 in the pin 61. As shown, the cotter pin can be of a self-locking type and the hole 65 can be perpendicular to the longitudinal direction of the pin 61.

The invention is not restricted to the embodiment shown, and can be varied within the scope of the appended claims. For example, the actuator part shown in Fig. 2 can be a detachable part, which is only fastened to the sleeve part when this is to be operated. Furthermore a fastening means as described above can be combined with a belt idler, which provides an additional slack of a driving belt when disconnecting an implement.

## Claims

1. An implement carrier (1), which comprises fastening means (5) for mounting an implement in front of the implement carrier in the driving direction thereof, the implement being fastened to the front part of the implement carrier, **characterised in that** at least one of said fastening means (5) comprises a sleeve part (11, 15; 69), which is attached at a first point of attachment on the implement carrier 1 and is pivotable about a first (13; 13') horizontal pivot extending substantially perpendicular to the driving direction of the implement carrier, an implement fastener (19; 53), to which an implement can be fastened, said implement fastener being attached at a second point of attachment on the sleeve part and there is pivotable about a second (33; 33') horizontal pivot extending substantially perpendicular to the driving direction of the implement carrier, and an actuator part (27; 57) by means of which the sleeve part (11, 15; 69) is pivotable about said first horizontal pivot (13; 13') from a first position (Fig. 3a), where the first point of attachment is positioned behind the second point of attachment, to a second position (Fig. 3e), where the first point of attachment is positioned in front of the second point of attachment.

2. An implement carrier as claimed in claim 1, in which the implement carrier comprises such fastening means on both sides of the centre line of the implement carrier extending in the driving direction thereof.

3. An implement carrier as claimed in claim 2, in which the fastening means are positioned in the hubs of the front wheels of the implement carrier.

4. An implement carrier as claimed in any one of the preceding claims, in which the actuator part (27) extends in two directions from said second horizontal pivot.

5. An implement carrier as claimed in any one of the preceding claims, in which the actuator part (27) in the first position is prevented from rotating forwards and the second horizontal pivot (33) is positioned under the first horizontal pivot (13).

6. An implement carrier as claimed in any one of the preceding claims, in which the actuator part (27) in the first position is locked to the implement fastener (19) by means of a cotter pin (47; 67).

7. An implement carrier as claimed in any one of the preceding claims, in which the actuator part (27; 57) is attached to the sleeve part (11, 15; 69).

8. An implement carrier as claimed in any one of the preceding claims, in which the implement fastener (53) is attached to the second point of attachment by a recess (55) in the implement fastener, so that the implement fastener in the first position is locked to the second point of attachment and in the second position is detachable from the second point of attachment.

9. An implement carrier (1), which comprises fastening means for mounting an implement in front of the implement carrier in the driving direction thereof, the implement being fastened to the front part to the implement carrier, **characterised in that** at least one of said fastening means (5) comprises
a sleeve part (11, 15; 69), which is attached at a first point of attachment on the implement carrier (1), is pivotable about a first (13;13') horizontal pivot extending substantially perpendicular to the driving direction to the implement carrier, and has a second point of attachment to which an implement fastener (19; 53) can be attached so that the implement fastener is pivotable about a second (33; 33') horizontal pivot extending substantially perpendicular to the driving direction to the implement carrier, and
an actuator part (27; 57), by means of which the sleeve part (11, 15; 69) is pivotable about said first horizontal pivot (13; 13') from a first position (Fig. 3a), where the first point of attachment is positioned behind the second point of attachment, to a second position (Fig. 3e), where the first point of attachment is positioned in front of the second point of attachment.

10. An implement carrier as claimed in claim 9, in which the actuator part (57) is formed integrally with the sleeve part (69).

11. An implement carrier as claimed in claim 9 or 10, in which the actuator part (57) has an opening (63), in which a pin (61) positioned on the implement fastener (53) is insertable for locking.

## Patentansprüche

1. Geräteträger (1), der Befestigungseinrichtungen (5) zum Befestigen eines Geräts vor dem Geräteträger in Fahrtrichtung desselben aufweist, wobei das Gerät am vorderen Teil des Geräteträgers befestigt wird,
**dadurch gekennzeichnet, dass** mindestens eine der Befestigungseinrichtungen (5) ein Hülsenteil (11, 15; 69) aufweist, das an einem ersten Befestigungspunkt an dem Geräteträger (1) befestigt ist und um eine erste (13; 13') horizontale Drehachse schwenkbar ist, die sich im Wesentlichen rechtwinklig zu der Fahrtrichtung des Geräteträgers erstreckt, ein Gerätebefestigungselement (19; 53) aufweist, an dem ein Gerät befestigt werden kann, wobei das Gerätebefestigungselement an einem zweiten Befestigungspunkt an dem Hülsenteil befestigt ist und dort um eine zweite (33; 33') horizontale Drehachse schwenkbar ist, die sich im Wesentlichen rechtwinklig zu der Fahrtrichtung des Geräteträgers erstreckt, sowie ein Betätigungsteil (27; 57) aufweist, mittels dessen das Hülsenteil (11, 15; 69) um die erste horizontale Drehachse (13; 13') von einer ersten Position (Fig. 3a), in der der erste Befestigungspunkt hinter dem zweiten Befestigungspunkt angeordnet ist, in eine zweite Position (Fig. 3e) schwenkbar ist, in der der erste Befestigungspunkt vor dem zweiten Befestigungspunkt angeordnet ist.

2. Geräteträger nach Anspruch 1,
bei dem der Geräteträger eine derartige Befestigungseinrichtung auf beiden Seiten von der Mittellinie des Geräteträgers mit einer Erstreckung in Fahrtrichtung desselben aufweist.

3. Geräteträger nach Anspruch 2,
bei dem die Befestigungseinrichtungen in den Naben der Vorderräder des Geräteträgers angeordnet sind.

4. Geräteträger nach einem der vorhergehenden Ansprüche,
bei dem sich das Betätigungsteil (27) in zwei Richtungen von der zweiten horizontalen Drehachse weg erstreckt.

5. Geräteträger nach einem der vorhergehenden Ansprüche,
bei dem das Betätigungsteil (27) in der ersten Position daran gehindert ist, sich nach vorne zu drehen, und die zweite horizontale Drehachse (33) unter der ersten horizontalen Drehachse (13) angeordnet ist.

6. Geräteträger nach einem der vorhergehenden Ansprüche,
bei dem das Betätigungsteil (27) in der ersten Position mittels eines Splints (47; 67) an dem Gerätebefestigungselement (19) verriegelt ist.

7. Geräteträger nach einem der vorhergehenden Ansprüche,
bei dem das Betätigungsteil (27; 57) an dem Hülsenteil (11, 15; 69) angebracht ist.

8. Geräteträger nach einem der vorhergehenden Ansprüche,
bei dem das Gerätebefestigungselement (53) an dem zweiten Befestigungspunkt durch eine Aussparung (55) in dem Gerätebefestigungselement befestigt ist, so dass das Gerätebefestigungselement in der ersten Position an dem zweiten Befestigungspunkt verriegelt ist und in der zweiten Position von dem zweiten Befestigungspunkt abnehmbar ist.

9. Geräteträger (1), der Befestigungseinrichtungen zum Befestigen eines Geräts vor dem Geräteträger in Fahrtrichtung desselben aufweist, wobei das Gerät am vorderen Teil des Geräteträgers befestigt wird,
**dadurch gekennzeichnet, dass** mindestens eine der Befestigungseinrichtungen (5) Folgendes aufweist:
ein Hülsenteil (11, 15; 69), das an einem ersten Befestigungspunkt an dem Geräteträger (1) befestigt ist, um eine erste (13; 13') horizontale Drehachse schwenkbar ist, die sich im Wesentlichen rechtwinklig zu der Fahrtrichtung des Geräteträgers erstreckt, sowie einen zweiten Befestigungspunkt aufweist, an dem ein Gerätebefestigungselement (19; 53) angebracht werden kann, so dass das Gerätebefestigungselement um eine zweite (33; 33') horizontale Drehachse schwenkbar ist, die sich im Wesentlichen rechtwinklig zu der Fahrtrichtung des Geräteträgers erstreckt, und
ein Betätigungsteil (27; 57), mittels dessen das Hülsenteil (11, 15; 69) um die erste horizontale Drehachse (13; 13') von einer ersten Position (Fig. 3a), in der der erste Befestigungspunkt hinter dem zweiten Befestigungspunkt angeordnet ist, in eine zweite Position (Fig. 3e) schwenkbar ist, in der der erste Befestigungspunkt vor dem zweiten Befestigungspunkt angeordnet ist.

10. Geräteträger nach Anspruch 9,
bei dem das Betätigungsteil (57) mit dem Hülsenteil (69) einstückig ausgebildet ist.

11. Geräteträger nach Anspruch 9 oder 10,
bei dem das Betätigungsteil (57) eine Öffnung (63) aufweist, in der ein an dem Gerätebefestigungselement (53) angeordneter Stift (61) zur Verriegelung einsetzbar ist.

## Revendications

1. Support d'instrument (1) qui comprend des moyens de fixation (5) pour monter un instrument à l'avant du support d'instrument dans sa direction d'entraînement, l'instrument étant fixé sur la partie avant du support d'instrument, **caractérisé en ce qu'**au moins l'un desdits moyens de fixation (5) comprend une partie de manchon (11, 15 ; 69) qui est fixée au niveau d'un point de fixation du support d'instrument (1) et peut pivoter autour d'un premier pivot horizontal (13 ; 13') s'étendant sensiblement perpendiculairement à la direction d'entraînement du support d'instrument, une fixation d'instrument (19 ; 53), à laquelle un instrument peut être fixé, ladite fixation d'instrument étant fixée au niveau d'un second point de fixation de la partie de manchon et elle peut pivoter autour d'un second pivot horizontal (33 ; 33') s'étendant sensiblement perpendiculairement à la direction d'entraînement du support d'instrument, et une partie d'actionneur (27 ; 57) au moyen de laquelle la partie de manchon (11, 15 ; 69) peut pivoter autour dudit premier pivot horizontal (13 ; 13') à partir d'une première position (figure 3a), où le premier point de fixation est positionné derrière le second point de fixation, jusqu'à une seconde position (figure 3e), où le point de fixation est positionné en face du second point de fixation.

2. Support d'instrument selon la revendication 1, dans lequel le support d'instrument comprend de tels moyens de fixation des deux côtés de la ligne centrale du support d'instrument s'étendant dans sa direction d'entraînement.

3. Support d'instrument selon la revendication 2, dans lequel les moyens de fixation sont positionnés dans les moyeux des roues avant du support d'instrument.

4. Support d'instrument selon l'une quelconque des revendications précédentes, dans lequel la partie d'actionneur (27) s'étend dans deux directions à partir dudit second pivot horizontal.

5. Support d'instrument selon l'une quelconque des revendications précédentes, dans lequel la partie d'actionneur (27) dans la première position ne peut pas tourner vers l'avant et le second pivot horizontal (33) est positionné sous le premier pivot horizontal (13).

6. Support d'instrument selon l'une quelconque des revendications précédentes, dans lequel la partie d'actionneur (27) dans la première position est verrouillée sur la fixation d'instrument (19) au moyen d'une broche fendue (47 ; 67).

7. Dispositif de pointage selon l'une quelconque des revendications précédentes, dans laquelle la partie d'actionneur (27 ; 57) est fixée sur la partie de manchon (11, 15 ; 69).

8. Support d'instrument selon l'une quelconque des revendications précédentes, dans lequel la fixation d'instrument (53) est fixée au second point de fixation par un évidement (55) dans la fixation d'instrument, de sorte que la fixation d'instrument dans la première position, est verrouillée sur le second point de fixation et dans la seconde position, est détachable du second point de fixation.

9. Support d'instrument (1) qui comprend des moyens de fixation pour monter un instrument à l'avant du support d'instrument dans sa direction d'entraînement, l'instrument étant fixé à la partie avant sur le support d'instrument, **caractérisé en ce qu'**au moins l'un desdits moyens de fixation (5) comprend :
une partie de manchon (11, 15 ; 69) qui est fixée au niveau d'un premier point de fixation sur le support d'instrument (1), peut pivoter autour d'un premier pivot horizontal (13 ; 13') s'étendant sensiblement perpendiculairement à la direction d'entraînement vers le support d'instrument, et a un second point de fixation auquel une fixation d'instrument (19 ; 53) peut être fixée de sorte que la fixation d'instrument peut pivoter autour d'un second pivot horizontal (33 ; 33') s'étendant sensiblement perpendiculairement à la direction d'entraînement vers le support d'instrument, et
une partie d'actionneur (27 ; 57) au moyen de laquelle la partie de manchon (11, 15 ; 69) peut pivoter autour dudit premier pivot horizontal (13 ; 13') à partir d'une première position (figure 3a) dans laquelle le premier point de fixation est positionné derrière le second point de fixation, jusqu'à une seconde position (figure 3e) dans laquelle le premier point de fixation, est positionnée à l'avant du second point de fixation.

10. Support d'instrument selon la revendication 9, dans laquelle la partie d'actionneur (57) est formée de manière solidaire avec la partie de manchon (69).

11. Support d'instrument la revendication 9 ou 10, dans lequel la partie d'actionneur (57) a une ouverture (63) dans laquelle une broche (61) positionnée sur la fixation d'instrument (53) peut être insérée pour verrouillage.
